Europäisches Patentamt

**European Patent Office**

Office européen des brevets

(19)

(11) Veröffentlichungsnummer: **0 012 259**
**B1**

(12) **EUROPÄISCHE PATENTSCHRIFT**

(45) Veröffentlichungstag der Patentschrift:
20.07.83

(21) Anmeldenummer: 79104675.8

(22) Anmeldetag: 24.11.79

(51) Int. Cl.³: **C 08 F 10/02**, C 08 F 2/02,
B 32 B 27/32, B 05 D 7/00,
B 29 D 9/00, B 65 D 65/00

(54) Verfahren zur Herstellung von Verbundsystemen sowie derartige Verbundsysteme.

(30) Priorität: 08.12.78 DE 2853069

(43) Veröffentlichungstag der Anmeldung:
25.06.80 Patentblatt 80/13

(45) Bekanntmachung des Hinweises auf die Patenterteilung:
20.07.83 Patentblatt 83/29

(84) Benannte Vertragsstaaten:
**BE DE FR SE**

(56) Entgegenhaltungen:
**DE-A-1 910 743**
**DE-A-2 322 554**
**FR-A-2 259 696**
**GB-A-1 071 305**

**Ullmanns Encyklopädie der technischen Chemie, 4. Auflage, Band 3 (1973), Verfahrenstechnik II und Reaktionsapparate, Verlag Chemie, Weinheim/Bergstrasse Seite 323**

(73) Patentinhaber: **EC ERDÖLCHEMIE GMBH,
Postfach 75 2002, D-5000 Köln 71 (DE)**

(72) Erfinder: **Engelhard, Forest, Röntgenstrasse 43,
D-4047 Dormagen (DE)**
Erfinder: **Kuhn, Rainer, Dr., Fasanenweg 13,
D-5068 Odenthal (DE)**
Erfinder: **Pump, Wichard, Dr., Lohscheidt 19,
D-4330 Mülheim (DE)**
Erfinder: **Riess, Reinhard, Dr.,
August-Kierspel-Strasse 143, D-5060 Bergisch Gladbach
(DE)**
Erfinder: **Streib, Hugo, Dr., Am Heckerhof 56,
D-4150 Krefeld (DE)**

(74) Vertreter: **Dill, Erwin, Dr. et al, c/o BAYER AG
Zentralbereich Patente Marken und Lizenzen
Bayerwerk, D-5090 Leverkusen 1 (DE)**

Verfahren zur Herstellung von Verbundsystemen sowie derartige Verbundsysteme

Die vorliegende Erfindung betrifft ein Verfahren zur Herstellung von Verbundsystemen mit verbesserter Verbundhaftung durch Beschichten von flexiblen Substraten mit Hochdruckpolyethylen als Beschichtungsharz sowie derartige Verbundsysteme.

Es ist bereits bekannt, Verbundsysteme durch Extrusionsbeschichtung von flexiblen Trägerbahnen wie Papier, Karton, Aluminiumfolie, Zellglas, Polyamid, Polypropylen, Polyester u.a. sowie von aus diesen gebildeten Mehrschichtkombinationen mit Hochdruckpolyethylen als Beschichtungsharz herzustellen (vgl. Kunststoff-Handbuch, Band IV, Polyolefine, Hanser-Verlag, München 1969, Seite 411ff).

Derartige Verbundsysteme werden bei der Herstellung technischer Fertigprodukte wie Fotopapier, Einweggeschirr u.ä. sowie vor allem als Packstoff für die Verpackung von festen Stoffen und Flüssigkeiten eingesetzt. Vor allem für die Verpackung von Lebensmitteln, wie Milch- und Fruchtsaftgetränken, Tiefkühlkost, Käse, Fleisch, Kaffee, Teigwaren u.ä. werden in grossem Massstab verschiedenartige Verbundsysteme hergestellt, wobei vielfach eine Aluminiumfolie als Sperrschicht gegen Licht- und Sauerstoffdurchtritt durch die Verpackung ein Bestandteil des Verbundsystems ist.

Die Extrusionsbeschichtung mit Hochdruckpolyethylen ist einer der wesentlichen Verfahrensschritte bei der Herstellung von Verbundsystemen und wird durchgeführt, um entweder zwei flexible Trägerbahnen, wie z.B. Karton und Aluminiumfolie, miteinander zu verbinden oder um auf ein Substrat wie Papier, Karton, Aluminiumfolie, Zellglas, Polyester, Polyamid, Polypropylen u.a. sowie aus diesen gebildete Mehrschichtkombinationen eine flüssigkeitsdichte und heisssiegelfähige Schicht aufzubringen (vgl. Kunststoff-Handbuch, Bd. IV, Polyolefine, Hanser-Verlag, München 1969, Seite 411ff).

Dabei wird nach den bisher bekannten Verfahren das Beschichtungsharz in einem Extruder aufgeschmolzen, durch eine Breitschlitzdüse als dünner Schmelzfilm auf den oder die zulaufenden Trägerstoffe aufextrudiert und in einem Walzenspalt, gebildet aus einer Kühlwalze und einer Anpresswalze, an den Trägerstoff angepresst und gleichzeitig abgekühlt (vgl. Kunststoff-Handbuch, Band IV, Polyolefine, Hanser Verlag, München 1969, Seite 411ff).

Für die Extrusionsbeschichtung verschiedenster Substrate muss das Polyethylen als Beschichtungsharz im wesentlichen folgende Anforderungen erfüllen (vgl. Converting Industry 5 (1968), 2–9 und 6 (1968), 2–14):
- ausreichende Fliessfähigkeit sowie thermische Stabilität bei den angewendeten, hohen Verarbeitungstemperaturen und Schwerkräften,
- hohe Ausziehfähigkeit des Schmelzfilms bei hohen Abzugsgeschwindigkeiten,
- geringe Einschnürung und daraus resultierende Randverdickung des Schmelzfilms (sog. «Neck In», gemessen als Differenz zwischen Düsenbreite und Breite des Schmelzfilms).
- gute Heisssiegelfähigkeit,
- hohe Verbundhaftung zwischen Substrat und Polyethylenschicht.

Von diesen Anforderungen ist die Verbundhaftung zwischen Polyethylenschicht und insbesondere Aluminiumfolie als Substrat ein kritischer und die Qualität des Verbundsystems als Packstoff bestimmender Faktor. Um eine hohe Verbundhaftung zur Aluminiumfolie auch im Kontakt mit flüssigen Füllgütern, d.h. eine hohe sogenannte «Nass-Verbundhaftung» zu erzielen, ist es erforderlich, dass der heisse Schmelzfilm während der Extrusionsbeschichtung eine bestimmte Oxidation durch den Kontakt mit Luftsauerstoff erfährt. Der so resultierende Oxidationsgrad der Polyethylen-schicht des fertigen Verbundsystems darf anderseits nicht so hoch sein, dass die Siegelfähigkeit der Polyethylenschicht verringert wird bzw. dass eine Geruchs- oder Geschmacksbeeinträchtigung des Füllgutes eintritt.

Die Oxidation des Schmelzefilms ist also möglichst auf die Grenzfläche Substrat/Polyethylen zu begrenzen. Dies wird nach den bisher bekannten Verfahren, z.B. nach dem Verfahren der DE-OS 1 910 743, dadurch erreicht, dass die zum Substrat hinweisende Seite des Schmelzefilms auf der Strecke zwischen Breitschlitzdüse und Walzenspalt mit einem Ozon-Luft-Gemisch, hergestellt durch Corona-Entladung, beaufschlagt wird.

Trotz dieser Massnahmen hat es sich in der Praxis erwiesen, dass die Summe der oben aufgeführten Anforderungen an das Beschichtungsharz und von diesen insbesondere die ausreichend hohe «Nass-Verbundhaftung» auf Aluminiumfolie mit den zur Zeit auf dem Markt erhältlichen Hochdruckpolyethylenen nicht hinreichend erfüllt werden kann.

Zur Herstellung eines anderen Hochdruck-Polyethylentyps wird nach DE-OS 2 322 554 unter sonst typischen Hochdruck-Polyethylen-Herstellungsbedingungen in zwei hintereinander geschalteten Autoklaven gearbeitet, die durch einen Kühler getrennt sind. Dieser Kühler dient der Zwischenkühlung des Reaktionsgemisches zur Erhöhung des Ethylenumsatzes. Die Autoklaven haben ein Verhältnis von Länge zu Durchmesser (L/D) von 5–20 : 1. Solche hohen L/D-Verhältnisse unterdrücken die Rückvermischung im Polymerisationsgemisch weitgehend und ergeben daher kleine Werte für die Langkettenverzweigung und kleine Werte für die molekulare Uneinheitlichkeit. Solche Polyethylentypen sind besonders für die Herstellung von Platten oder Folien geeignet, nicht jedoch für Beschichtungen.

Gegenstand der vorliegenden Erfindung ist nun ein Verbundsystem unter Verwendung eines speziellen Hochdruckpolyethylen-Beschichtungsharzes, mit dem die Summe der obengenannten Anforderungen erfüllt wird, sowie ein Verfahren zu seiner Herstellung.

Es wurde nämlich ein Verfahren zur Herstellung von Verbundsystemen mit einer Nass-Verbundhaftung, die den Wert von 3,43 N/25 mm (Anfangswert) bzw. 4,9 N/25 mm (30 Tage nach Herstellung) übertrifft, durch Beschichten von flexiblen Substraten mit in Autoklaven mit praktisch vollständiger Rückvermischung bei Drücken von $8.10^7$ bis $3.10^8$ Pa in Gegenwart von freie Radikale bildenden Initiatoren hergestelltem Hochdruckpolyethylen (LDPE) als Beschichtungsharz gefunden, das dadurch gekennzeichnet ist, dass man als Beschichtungsharz ein LDPE, das Comonomere enthalten kann, einsetzt, das erhalten wird, indem man

a) zwei Autoklaven derart schaltet, dass das gesamte Reaktionsprodukt des ersten Autoklavs in den zweiten Autoklav übergeführt wird,

b) für jeden Autoklav ein Längen-/Durchmesser-Verhältnis (L/D) von etwa 1 : 1 bis 3 : 1 wählt;

c) den Monomer(en)einsatzstrom zwischen beiden Autoklaven so aufteilt, dass der Monomer(en)einsatzstrom zum ersten Autoklav gleich gross oder grösser als der Monomer(en)-einsatzstrom zum zweiten Autoklav ist,

d) die Reaktionstemperaturen in den beiden Autoklaven so einstellt, dass die Reaktionstemperatur im ersten Autoklav niedriger ist als die Reaktionstemperatur im zweiten Autoklav, und

e) den Initiator für den ersten Autoklav gleich oder verschieden von dem Initiator für den zweiten Autoklav wählt,

und das eine Dichte von 915 bis 930 kg/m³ und einen Schmelzindex von 0,2 bis 20 g (190 °C/ 21,18 N/ 10 Min.) aufweist.

Die Verbundsysteme mit der angegebenen Verbundhaftung gemäss der Erfindung werden durch Extrusionsbeschichtung von flexiblen Trägerbahnen wie Papier, Karton, Zellglas, Polyamid, Polypropylen, Polyester u.a. sowie aus diesen gebildeten Mehrschichtkombinationen mit dem gemäss der Erfindung eingesetzten Hochdruckpolyethylen als Beschichtungsharz erzeugt. Die Verbundhaftung zwischen der Trägerbahn und der durch Extrusionsbeschichtung aufgetragenen Polyethylen-Schicht wird dabei soweit verbessert, dass die insbesondere für die Beschichtung von Aluminium-Folie/Karton-Verbunden in der Praxis allgemein geforderte, sogenannte «Nass-Verbundhaftung» von mindestens 3,5 N/25 mm (Anfangswert) bzw. 5,0 N/25 mm (Niveau bei 30 Tagen nach Herstellung) übertroffen wird.

Das Beschichten von flexiblen Substraten mit Hochdruckpolyethylen erfolgt durch Extrusionsbeschichtung nach an sich bekannten Verfahren auf Beschichtungsanlagen, die in ihren wesentlichen Anlagenteilen bestehen aus

- Abrollung der zu beschichtenden Trägerbahn
- Extruder mit Breitschlitzdüse zum Aufschmelzen des Polyethylens und Extrudieren des Schmelzefilms
- Ozon-Behandlungsstation des Schmelzefilms
- Laminator, bestehend aus Kühlwalze und Anpresswalze, in dessen Walzenspalt der Schmelzefilm an die Trägerbahn angepresst wird
- Aufrollung der beschichteten Trägerbahn
- Zugspannungsregelung.

Das im erfindungsgemässen Verfahren eingesetzte LDPE ist insbesondere dadurch gekennzeichnet, dass bei seiner Herstellung durch Einstellung eines Temperaturprofils zwischen den beiden Autoklaven auch ein Profil der Polymerkonzentration erzeugt wird. Abgesehen von Schmelzindex und Dichte, die in bekannter Weise durch Druck, Gesamttemperatur und Molekulargewichtsreglerkonzentration festgelegt werden, können durch das Temperatur- und Konzentrationsprofil zusätzlich die molekularen Eigenschaften Langkettenverzweigung, Molekulargewichtsverteilung, Kurzkettenverzweigung und Anteil an Doppelbindungen derart eingestellt werden, dass die obengenannten, für Beschichtungsharze massgebenden Grössen Fliessfähigkeit, Ausziehfähigkeit, «Neck In», Heissiegelfähigkeit und vor allem Verbundhaftung in ihrer Summe den Praxisanforderungen in einer bisher nicht erreichten Weise entsprechen.

Wie in den Beispielen noch verdeutlicht werden wird, nehmen insbesondere sowohl die Verbundhaftung als auch der «Neck In» mit steigendem Temperaturprofil zu. Da ein zu hoher «Neck In» die Verarbeitung beeinträchtigen kann, ist es vorteilhaft, bei der Polymerisation einen mittleren Temperaturunterschied von 20 bis 60 °C, insbesondere 40 bis 50 °C, zwischen den beiden Autoklaven einzustellen. Die so hergestellten Polyethylene weisen insbesondere eine ausreichend hohe Verbundhaftung bei gleichzeitig geringem «Neck In» auf.

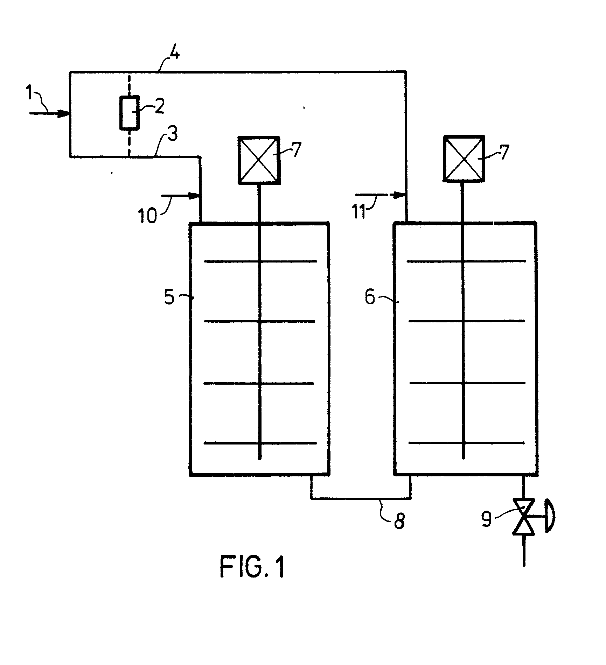

Eine allgemeine Ausführungsform des erfindungsgemässen Verfahrens sei anhand der Abbildung 1 wie folgt näher erläutert:

Das Einsatzethylen (1), das Comonomere, wie Vinylacetat, Buten-1 u.a., sowie Molekulargewichtsregler, wie Wasserstoff, Ethan, Propan u.a. enthalten kann und das je nach Reaktionserfordernissen einen Druck von $8 \cdot 10^7$ bis $3 \cdot 10^8$ Pa und eine Temperatur von −20 bis 100 °C hat, wird über eine Verhältnisregelung (2) in die Teilströme (3) und (4) aufgeteilt, die zu den Autoklaven (5) und (6) gehen. (7) bezeichnet die Rührantriebe.

Das Reaktionsgemisch aus Autoklav (5) geht über die Verbindungsleitung (8) in Autoklav (6), das Reaktionsgemisch aus Autoklav (6) über die Druckregelung (9) in Abscheideeinrichtungen zur Auftrennung des Reaktionsgemisches.

Die Initiatoren (10) und (11), die in die Teilströme (3) und (4) unmittelbar vor deren Eintritt in die Autoklaven (5) bzw. (6) eingespeist werden, sind nach Art und Menge den jeweiligen Reaktionstemperaturen angepasst. Man verwendet beispielsweise tertiär-Butylperisooctanoat, tertiär-Butyl-pernonanoat, tertiär-Butyl-perneodecanoat oder tertiär-Butyl-perpivalat.

Die Teilströme (3) und (4) werden so eingestellt, dass (3) gleich/grösser (4) ist, und die Reaktionstemperaturen T1 und T2 (in Autoklav (5) bzw. (6)) so gewählt, dass immer T2 grösser T1 ist. Bevorzugte Temperaturbereiche für T1 und T2 sind 120° bis 220 °C für T1 bzw. 190° bis 280 °C für T2.

Für die Extrusionsbeschichtung besonders geeignet sind zwei Gruppen von Produkten, die je nach den Anforderungen und der Maschinenausrüstung des Verarbeiters bevorzugt eingesetzt werden. Zur einen Gruppe gehören Polyethylentypen mit Schmelzindices von 6–8 g (190 °C/21,18 N/10 Min.) und Dichten von 916–919 kg/m³, zur anderen solche mit Schmelzindices von 3–5 g (190 °C/21,18 N/10 Min.) und Dichten von 922–924 kg/m³. Gemäss der Erfindung können Polyethylene entsprechend beiden Produktgruppen eingesetzt werden.

Das im erfindungsgemässen Verfahren eingesetzte Polyethylen kann ferner Additive, wie z.B. Stabilisatoren, Gleitmittel, Antiblockmittel, Antistatika, Russe, Farbstoffe, Pigmente, flammhemmende Zusätze, anorganische und organische Füllstoffe, Glasfasern, textile Fasern sowie andere Polymere wie z.B. hochdichtes Polyethylen, Polypropylen, Polybuten, Copolymere von Ethylen und Vinylestern und/oder ungesättigten Säuren und/oder deren Estern und/oder deren Metallsalzen enthalten.

Die folgenden Beispiele sollen das erfindungsgemässe Verfahren näher erläutern. Die Beschreibung der Beispiele gemäss Tabelle 1 ist gegliedert in
a) Herstellung der Hochdruckpolyethylene
b) Durchführung der Extrusionsbeschichtung
c) Prüfung der Verbundsysteme auf Oxidation, «Neck in» und Verbundhaftung
d) Ergebnisse.

Tabelle 1

| Beispiel | Monomer (1) to/h | Monomer- Aufteilung (3):(4) | MG-Regler konz./Typ Vol.-% | Druck Pa | Reaktionstemperaturen | | | Initiatoren | |
|---|---|---|---|---|---|---|---|---|---|
| | | | | | $T_1$ °C | $T_2$ °C | $\Delta T$ °C | (10) | (11) |
| 1 | 113 | 2:1 | 1,4/$C_3H_8$ | 1,54 · 10⁸ | 215 | 260 | 45 | PO¹ | PN² |
| 2 | 112 | 3:1 | 1,2/$C_3H_8$ | 1,68 · 10⁸ | 260 | 260 | 0 | PN | PN |
| 3 | 118 | 3:1 | 0,4/$C_3H_8$ | 1,54 · 10⁸ | 260 | 260 | 0 | PN | PN |
| 4 | 93 | 3:1 | 1,5/$C_3H_8$ | 1,53 · 10⁸ | 200 | 260 | 60 | PO | PN |
| 5 | 81 | 3:1 | 1,6/$C_3H_8$ | 1,53 · 10⁸ | 170 | 260 | 90 | PO | PN |

¹ tertiär-Butyl-per-isooctanoat
² tertiär-Butyl-per-nonanoat

Beispiele 1–5 (vergleiche Tabelle 1)
a) Herstellung der Hochdruckpolyethylene

Die Synthese der Polyethylene entsprechend den Beispielen 1–5 erfolgte in einer Hochdruck-Polymerisationsanlage mit zwei praktisch vollständig durchmischten Rührautoklaven, die entsprechend dem in Abbildung 1 gezeigten Schema miteinander verbunden sind. Beide Autoklaven haben ein L/D-Verhältnis von 2 : 1; das Volumenverhältnis vom ersten zum zweiten Autoklav beträgt ebenfalls 2 : 1.

Die Polymerisationsbedingungen: Monomereinsatzmenge des Einsatzethylens (1), Verhältnis der Monomereinspeisung in den ersten (5) und den zweiten (6) Autoklav ((3) : (4)), Molekulargewichtsregler (Konzentration, Typ), Druck, Reaktionstemperaturen im ersten und zweiten Autoklav (T1 und T2) sowie die Temperaturdifferenz (ΔT) und die Initiatoren (10) und (11) sind in Tabelle 1 aufgeführt.

b) Durchführung der Extrusionsbeschichtung

Als zu beschichtende Trägerbahn wurde gleichbleibend für alle Beispiele ein vorgefertigter Verbund mit dem Aufbau: PE₁ /Karton /PE₂ /Aluminium eingesetzt, der auf der freien Aluminium-Seite mit dem Polyethylen (PE₃) entsprechend den Beispielen 1–5 beschichtet wurde. Der so resultierende Verbund mit dem Aufbau PE₁/Karton/PE₂/ Aluminium/PE₃ wird in der Praxis als Packstoff für die H-Milch-Verpackung verwendet.

Die für die Versuche verwendete Extrusionsbeschichtungsanlage und die Beschichtungsbedingungen werden durch die folgenden Daten beschrieben:

| | |
|---|---|
| Bahnbreite: | 800 mm |
| Bahngeschwindigkeit: | 150m/min |
| Auftragsgewicht (PE₃): | 45 g/m² |
| Extruder (Fa. Er-We-Pa) | |
| Schneckendurchmesser: | 4,5″ (114,3 mm) |
| Schneckenlänge: | 28 D |
| Drehzahl: | 172 min⁻¹ |
| Düse (Fa. Er-We-Pa) | |
| Breite: | 870 mm |
| Spalt: | 0,9 mm |
| Abstand: Düse-Walzenspalt | 155 mm |
| Temperaturen ( °C): | |
| Schnecke: | 250, 260, 270, 290, 290 |
| Adapter: | 290, 300 |
| Düse: | 290, 290, 300, 290, 290 |
| Düsenlippen: | 295 |
| Masse: | 300 |
| Laminator: | Kühlwalzen-Oberfläche hochglänzend Temperatur 14 °C |

Vorbehandlung

Die Aluminium-Oberfläche der zu beschichtenden Trägerbahn wurde mittels Corona-Entladung vorbehandelt. Der Polyethylen-Schmelzfilm wurde unmittelbar oberhalb des Walzenspalts auf der zur Trägerbahn hinweisenden Seite mit Ozon aus einer «Ozon-Dusche» (Fa. Softal, Hamburg) beaufschlagt:

c) Prüfungen

Die Oxidation der freien PE₃-Oberfläche des Verbundes wurde nach folgendem Farbtest geprüft:

Zunächst wurde aus Duralin-Rot (Duralinfarbe 49978, Testfarbe zur Prüfung von druckvorbehandelter Polyethylenfolie, Fa. G-MAN, P.O. Box 49, S 23101, Trelleborg, Schweden), und Ethylalkohol im Mischungsverhältnis 1 : 1 eine Testfarbe hergestellt, die mit einem Pinsel quer zur Extrusionsrichtung auf die PE-beschichtete Trägerbahn aufgetragen wurde. Nach 20 Minuten Trockenzeit (Raumtemperatur) wurde ein Tesastreifen aufgeklebt, der luftblasenfrei angedrückt wurde. Zur Beurteilung des Oxidationsgrades wurde der Tesastreifen durch schnelles Abziehen entfernt.

Stärke des Abzugsgeräusches sowie Rückstand der Farbe auf der PE-beschichteten Trägerbahn sind ein Mass für den Oxidationsgrad. Man unterscheidet drei Oxidationsstufen:

– schwaches Abzugsgeräusch kein Farbrückstand auf PE: keine Oxidation
– mittleres Abzugsgeräusch geringe Farbrückstände auf PE: mittlere Oxidation
– starkes Abzugsgeräusch kein Ablösen der Farbe von PE: starke Oxidation

Die Bestimmung des «Neck In» erfolgte durch Ausmessen der Breite der Beschichtung PE₃) auf der beschichteten Trägerbahn und Bildung der Differenz: Düsenbreite – Beschichtungsbreite.

Die Aluminium/PE₃-Verbundhaftung (VH) wurde nach erfolgter PE-Beschichtung als «O»-Wert und in zeitlich sinnvollen Intervallen an 25 mm Streifenproben als VH (trocken) bzw. als VH (nass) (nach Lagerung – 20 s in Wasser von 70°C, anschliessend 10 s in Wasser von RT) mit Hilfe eines Kleefkracht-Meters (Fa. Paramelt-Syntac B.V., P.O. Box 392, 2000 AJ/Haarlem, Niederlande) ermittelt (Angaben in N/25 mm).

Über der Bahnbreite wurden in gleichmässigen Abständen 12 Proben entnommen. Von den 4 Proben aus der Bahnmitte (Messstellen 5–8) wurde das arithmetische Mittel (VHm 5–8) gebildet und über die Zeit in Diagrammform aufgetragen (vgl. E. Prinz, Kunststoff-Journal, Oktober 1974, S. 15).

d) Ergebnisse der Beispiele 1–5

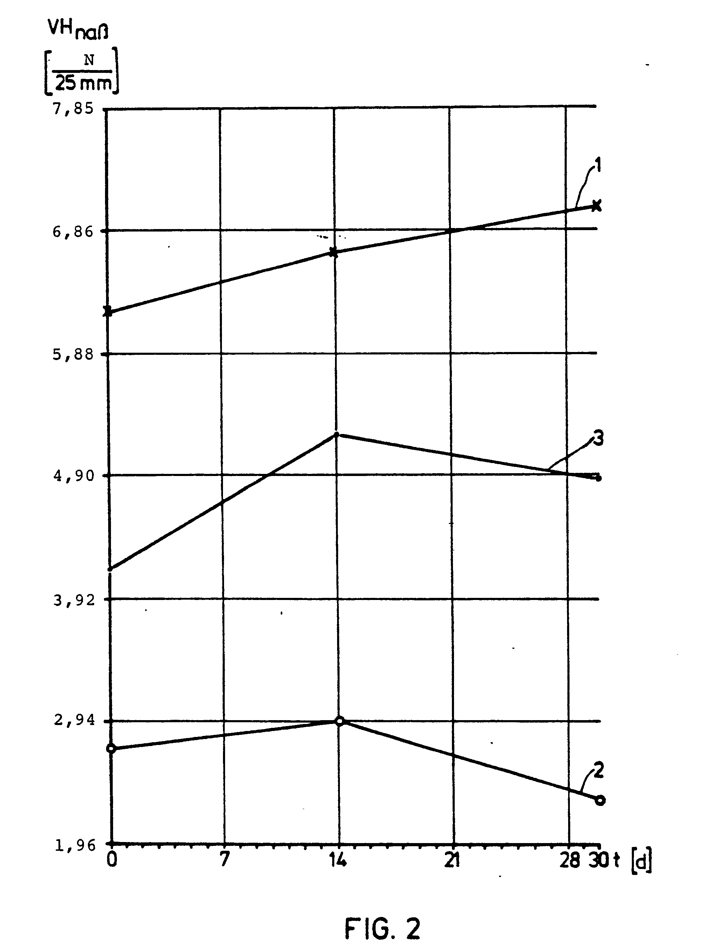

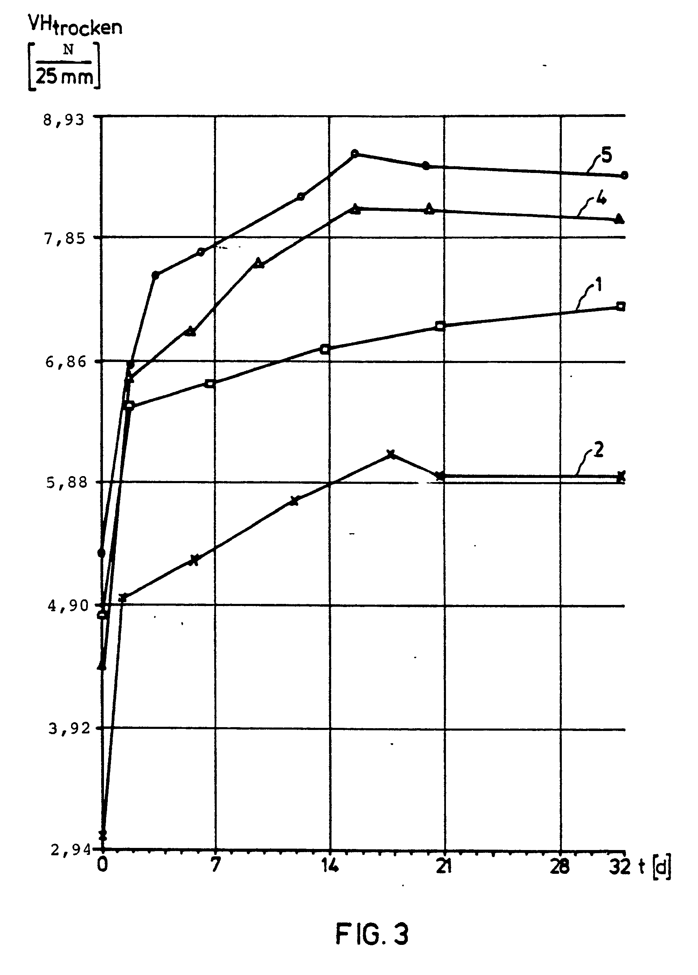

Die Versuchsergebnisse sind in Tabelle 2 sowie Abbildung 2 und 3 zusammengestellt. Beispiel 1, welches das erfindungsgemässe Verfahren demonstriert, weist im Vergleich zu den Beispielen 1 und 3 die höchste Nass-Verbundhaftung auf, vgl. Abbildung 2, sowie einen «Neck In»-Wert, der unterhalb der in der Praxis vertretbaren Grenze von 50 mm bleibt, vgl. Tabelle 2.

Der Vergleich des Beispiels 1 mit den Beispielen 2, 4 und 5 zeigt ausserdem, dass in der Reihenfolge Beispiel 1, 1, 4, 5 mit zunehmendem Temperaturprofil ΔT, vgl. Tabelle 1, sowohl die Verbundhaftung, in Abbildung 3 angegeben als Trockenverbundhaftung, als auch der «Neck In», vgl. Tabelle 2, ansteigen.

Beispiel 1 stellt demnach, gemessen an der Summe der Anforderungen hinsichtlich Verbundhaftung, «Neck In» und Oxidation, das optimale Ergebnis dar.

Tabelle 2

| Beispiel | MI g/10 min | Dichte kg/m³ | Oxidation der PE₃-Oberfläche | «Neck In» mm | Verbundhaftung[1] Nass- N/25 mm | Trocken N/25 mm |
|---|---|---|---|---|---|---|
| 1 | 7,2 | 918,4 | mittel | 48 | 5,88 | 6,86 |
| 2 | 6,7 | 918,0 | mittel | 40 | 2,94 | 5,88 |
| 3 | 6,9 | 916,2 | mittel | 38 | 4,9 | |
| 4 | 7,6 | 919,0 | mittel | 54 | | 7,85 |
| 5 | 7,6 | 919,2 | mittel | 56 | | 7,85 |
| | | | | | s. Fig. 2 | s. Fig. 3 |

[1] näherungsweise angegebene Mittelwerte

**Patentansprüche**

1. Verfahren zur Herstellung von Verbundsystemen mit einer Nass-Verbundhaftung, die den Wert von 3,43 N/25 mm (Anfangswert) bzw. 4,9 N/25 mm (30 Tage nach Herstellung) übertrifft, durch Beschichten von flexiblen Substraten mit in Autoklaven mit praktisch vollständiger Rückvermischung bei Drücken von 8 · 10⁷ bis 3 · 10⁸ Pa in Gegenwart von freie Radikale bildenden Initiatoren hergestelltem Hochdruckpolyethylen (LDPE) als Beschichtungsharz, dadurch gekennzeichnet, dass man als Beschichtungsharz ein LDPE, das Comonomere enthalten kann, einsetzt, das erhalten wird, indem man

a) zwei Autoklaven derart schaltet, dass das gesamte Reaktionsprodukt des ersten Autoklavs in den zweiten Autoklav übergeführt wird,

b) für jeden Autoklav ein Längen-/Durchmesser-Verhältnis (L/D) von 1 : 1 bis 3 : 2 wählt,

c) den Monomer(en)einsatzstrom zwischen beiden Autoklaven so aufteilt, dass der Monomer(en)einsatzstrom zum ersten Autoklav gleich gross oder grösser als der Monomer(en)einsatzstrom zum zweiten Autoklav ist,

d) die Reaktionstemperaturen in den beiden Autoklaven so einstellt, dass die Reaktionstemperatur im ersten Autoklav niedriger ist als die Reaktionstemperatur im zweiten Autoklav, und

e) den Initiator für den ersten Autoklav gleich oder verschieden von dem Initiator für den zweiten Autoklav wählt,

und das eine Dichte von 915 bis 930 kg/m³ und einen Schmelzindex von 0,2 bis 20 g (190 °C/21,18 n/10 Min.) aufweist.

2. Verbundsysteme mit einer Nass-Verbundhaftung, die den Wert von 3,43 N/25 mm (Anfangswert) bzw. 4,9 N/25 mm (30 Tage nach Herstellung) übertrifft, hergestellt durch Beschichten von flexiblen Substraten mit in Autoklaven mit praktisch vollständiger Rückvermischung bei Drücken von 8 · 10⁷ bis 3 · 10⁸ Pa in Gegenwart von freie Radikale bildenden Initiatoren hergestelltem Hochdruckpolyethylen (LDPE), das Comonomere enthalten kann, als Beschichtungsharz, das erhalten wird, indem man

a) zwei Autoklaven derart schaltet, dass das gesamte Reaktionsprodukt des ersten Autoklavs in den zweiten Autoklav übergeführt wird,

b) für jeden Autoklav ein Längen-/Durchmesser-Verhältnis (L/D) von 1 : 1 bis 3 : 1 wählt,

c) den Monomer(en)einsatzstrom zwischen beiden Autoklaven so aufteilt, dass der Monomer(en)einsatzstrom zum ersten Autoklav gleich gross oder grösser als der Monomer(en)einsatzstrom zum zweiten Autoklav ist,

d) die Reaktionstemperaturen in den beiden Autoklaven so einstellt, dass die Reaktionstemperatur im ersten Autoklav niedriger ist als die Reaktionstemperatur im zweiten Autoklav, und

e) den Initiator für den ersten Autoklav gleich oder verschieden von dem Initiator für den zweiten Autoklav wählt,

und das eine Dichte von 915 bis 930 kg/m³ und einen Schmelzindex von 0,2 bis 20 g (190 °C/21,18 N/10 Min.) aufweist.

3. Verbundsysteme nach Anspruch 2, hergestellt durch Beschichten von flexiblen, Aluminiumfolie enthaltenden Substraten mit freier Aluminiumoberfläche auf dieser Aluminiumoberfläche.

4. Verbundsysteme nach Ansprüchen 2 und 3, wobei das Hochdruckpolyethylen eine Dichte von 916 bis 919 kg/m³ und einen Schmelzindex von 6 bis 8 g (190 °C/21,18 N/10 Min.) aufweist.

5. Verbundsysteme nach Ansprüchen 2 und 3, wobei das Hochdruckpolyethylen eine Dichte von 922 bis 924 kg/m³ und einen Schmelzindex von 3 bis 5 g (190 °C/21,18 N/10 Min.) aufweist.

**Claims**

1. Process for the production of composite systems with a wet-bond adhesion which exceeds the value of 3.43 N/25 mm (initial value) or 4.9 N/25 mm (30 days after production), by coating flexible substrates with, as the coating resin, low-density polyethylene (LDPE) prepared in an autoclave with virtually complete back-mixing, at pressures of 8.10⁷ to 3.10⁸ Pa, in the presence of initiators which form free radicals, characterised in that an LDPE which can contain comonomers and which is obtained by a method in which

a) two autoclaves are connected in such a manner that the total reaction product from the first autoclave is transferred to the second autoclave,

b) a length/diameter ratio (L/D) of 1 : 1 to 3 : 1 is chosen for each autoclave,

c) the input stream of monomer(s) is divided between the two autoclaves such that the input stream of monomer(s) to the first autoclave is equal to or greater than the input stream of monomer(s) to the second autoclave,

d) the reaction temperatures in the two autoclaves are set so that the reaction temperature in the first autoclave is lower than the reaction temperature in the second autoclave, and

e) the initiator for the first autoclave is chosen to be the same as, or different from, the initiator for the second autoclave, and which has a density of 915 to 930 kg/m³ and a melt index of 0.2 to 20 g (190 °C/21.18 N/10 min.), is employed as the coating resin.

2. Composite systems with a wet-bond adhesion which exceeds the value of 3.43 N/25 mm (initial value) or 4.9 N/25 mm (30 days after production), produced by coating flexible substrates with, as the coating resin, low-density polyethylene (LDPE) which is prepared in an autoclave with virtually complete back-mixing, at pressures of 8.10⁷ to 3.10⁸ Pa, in the presence of initiators forming free radicals, can contain comonomers and is obtained by a method in which

a) two autoclaves are connected in such a manner that the total reaction product from the first autoclave is transferred to the second autoclave,

b) a length/diameter ratio (L/D) of 1 : 1 to 3 : 1 is chosen for each autoclave,

c) the input stream of monomer(s) is divided between the two autoclaves such that the input stream of monomer(s) to the first autoclave is equal to or greater than the input stream of monomer(s) to the second autoclave,

d) the reaction temperatures in the two autoclaves are set so that the reaction temperature in the first autoclave is lower than the reaction temperature in the second autoclave, and

e) the initiator for the first autoclave ist chosen to be the same as, or different from, the initiator for the second autoclave, and which has a density of 915 to 930 kg/m³ and a melt index of 0.2 to 20 g (190 °C/21.18 N/10 min.).

3. Composite systems according to Claim 2, produced by a method in which flexible substrates which contain aluminium foil and have a free aluminium surface are coated on this aluminium surface.

4. Composite systems according to Claims 2 and 3, wherein the low-density polyethylene has a density of 916 to 919 kg/m³ and a melt index of 6 to 8 g (190 °C/21.18 N/10 min.).

5. Composite systems according to Claims 2 and 3, wherein the low-density polyethylene has a density of 922 to 924 kg/m³ and a melt index of 3 to 5 g (190 °C/21.18 N/10 min.).

**Revendications**

1. Procédé de fabrication de systèmes composites ayant une adhérence composite à l'état humide dépassant la valeur de 3,43 N/25 mm (valeur initiale) ou 4,9 N/25 mm (30 jours après la fabrication), par enduction de substrats flexibles avec, comme résine d'enduction, du polyéthylène haute pression (LDPE) préparé en autoclaves avec remélangeage pratiquement complet sous des pressions de $8.10^7$ à $3.10^8$ Pa en présence d'initiateurs formant des radicaux libres, caractérisé en ce que, comme résine d'enduction, on utilise un LDPE pouvant contenir des comonomères et obtenu de la manière suivante:

a) on monte deux autoclaves de telle sorte que tout le produit réactionnel du premier autoclave soit transféré dans le deuxième,

b) pour chaque autoclave, on choisit un rapport longueur/diamètre (L/D) de 1 : 1 à 3 : 1;

c) on répartit le courant d'entrée du ou des monomères entre les deux autoclaves de telle sorte que le courant d'entrée du ou des monomères dans le premier autoclave soit égal ou supérieur au courant d'entrée du ou des monomères dans le deuxième autoclave;

d) on règle les températures réactionnelles dans les deux autoclaves de telle sorte que la température réactionnelle régnant dans le premier autoclave soit inférieure à la température réactionnelle régnant dans le second, et

e) on choisit, pour le premier autoclave, un initiateur identique à ou différent de l'initiateur prévu pour le deuxième autoclave,

ce LDPE ayant une densité de 915 à 930 kg/m³ et un indice de fusion de 0,2 à 20 g (190 °C/21,18 N/10 minutes).

2. Systèmes composites ayant, à l'état humide, une adhérence composite qui dépasse la valeur de 3,43 N/25 mm (valeur initiale) ou de 4,9 N/25 mm (30 jours après la fabrication), ces systèmes composites étant obtenus par enduction de substrats flexibles avec, comme résine d'enduction, du polyéthylène haute pression (LDPE) préparé en autoclaves avec remélangeage pratiquement complet sous des pressions de $8.10^7$ à $3.10^8$ Pa en présence d'initiateurs formateurs de radicaux libres, ce polyéthylène haute pression pouvant contenir des comonomères, tandis qu'il est obtenu de la manière suivante:

a) on monte deux autoclaves de telle sorte que tout le produit réactionnel du premier autoclave soit transféré dans le deuxième,

b) pour chaque autoclave, on choisit un rapport longueur/diamètre (L/D) de 1 : 1 à 3 : 1;

c) on répartit le courant d'entrée du ou des monomères entre les deux autoclaves de telle sorte que le courant d'entrée du ou des monomères dans le premier autoclave soit égal ou supérieur au courant d'entrée du ou des monomères dans le deuxième autoclave;

d) on règle les températures réactionnelles dans les deux autoclaves de telle sorte que la température réactionnelle régnant dans le premier autoclave soit inférieure à la température réactionnelle régnant dans le second, et

e) on choisit, pour le premier autoclave, un initiateur identique à ou différent de l'initiateur prévu pour le deuxième autoclave, ce LDPE ayant une densité de 915 à 930 kg/m³ et un indice de fusion de 0,2 à 20 g (190 °C/21,18 N/10 minutes).

3. Systèmes composites suivant la revendication 2, obtenus par enduction de substrats flexibles contenant une feuille d'aluminium avec une surface libre d'aluminium sur cette surface d'aluminium.

4. Systèmes composites suivant les revendications 2 et 3, le polyéthylène haute pression ayant une densité de 916 à 919 kg/m³ et un indice de fusion de 6 à 8 g (190 °C/21,18 N/10 minutes).

5. Systèmes composites suivant les revendications 2 et 3, le polyéthylène haute pression ayant une densité de 922 à 924 kg/m³ et un indice de fusion de 3 à 5 g (190 °C/21,18 N/10 minutes).

FIG. 1

FIG. 2

FIG. 3